# EUROPÄISCHE PATENTSCHRIFT

(11) **EP 1 231 452 B1**
(45) Veröffentlichungstag und Bekanntmachung des Hinweises auf die Patenterteilung: **02.07.2008**
(21) Anmeldenummer: 02001367.8
(22) Anmeldetag: 19.01.2002
(51) Int. Cl.: G01B 11/26

(54) **Winkelmesseinrichtung**
Measuring arrangement for angles
Dispositif de mesure des angles

(30) Priorität: 09.02.2001 DE 10106012
(43) Veröffentlichungstag der Anmeldung: 14.08.2002
(73) Patentinhaber: Dr. Johannes Heidenhain GmbH, 83292 Traunreut (DE)
(72) Erfinder: Feichtinger, Kurt, 83349 Palling (DE)

(56) Entgegenhaltungen:
- EP-A- 1 211 482
- DE-A- 4 331 668
- DE-A- 19 751 019

## Beschreibung

Die Erfindung betrifft eine Winkelmesseinrichtung gemäß dem Oberbegriff des Anspruches 1.

Eine derartige Winkelmesseinrichtung ist in der DE 43 31 668 C2 beschrieben. Ein Maßband ist an einer konkav gekrümmten Innenwand eines Trägerkörpers befestigt. Die Länge des Maßbandes und der Umfang der Innenwand sind so aufeinander abgestimmt, dass das Maßband durch Einschnappen fixiert wird und das Maßband dann spielfrei an der Innenwand anliegt.

Ähnliche Winkelmesseinrichtungen mit Justierelementen sind aus der DE 4 331 668 A1 und der nach veröffentlichten EP 1 211 482 A1 bekannt.

Diese Abstimmung ist in der Praxis relativ schwierig realisierbar. Ist das Maßband zu kurz, liegt es nicht über die gesamte Länge an der Innenwand an. Ist das Maßband zu lang, liegt es nach dem Einschnappen zwar über die gesamte Länge spielfrei an der Innenwand an, die Anpresskraft, mit der das Maßband an der Innenwand nach dem Einschnappen anliegt ist aber zu groß, so dass aufgrund der Seilreibung sich das Maßband nicht frei entspannen kann und ein ungleichmäßiger Druckverlauf über die gesamte Maßbandlänge auftritt. Dieser Druckverlauf verursacht eine partielle Längenänderung des Maßbandes und führt somit zu Messfehlern.

Aufgabe der Erfindung ist es daher, eine Winkemesseinrichtung anzugeben, bei der das Maßband durch Einschnappen befestigbar ist und der Umfang der Innenwand sowie die Länge des Maßbandes einfach aufeinander abgestimmt werden können.

Diese Aufgabe wird durch eine Winkelmesseinrichtung mit den Merkmalen des Anspruches 1 gelöst.

Durch diese Maßnahme ist die Länge des Umfanges der Innenwand, an der das Maßband anliegt auf die Länge des Maßbandes einstellbar, so dass die Anpresskraft, mit der das Maßband an der Innenwand anliegt, leicht justiert und optimiert werden kann.

Vorteilhafte Ausbildungen der Erfindung sind in den abhängigen Ansprüchen angegeben.

Mit Hilfe der Zeichnungen wird die Erfindung anhand von Ausführungsbeispielen noch näher erläutert.

Es zeigt
- Figur 1: einen Längsschnitt einer Winkelmesseinrichtung während der Montage,
- Figur 2: einen Längsschnitt der Winkelmesseinrichtung im Betrieb,
- Figur 3: eine Draufsicht der Winkelmesseinrichtung gemäß Figur 2 gestreckt dargestellt,
- Figur 4: den Bereich A der Winkelmesseinrichtung gemäß Figur 2 vergrößert dargestellt,
- Figur 5: ein Justierelement und

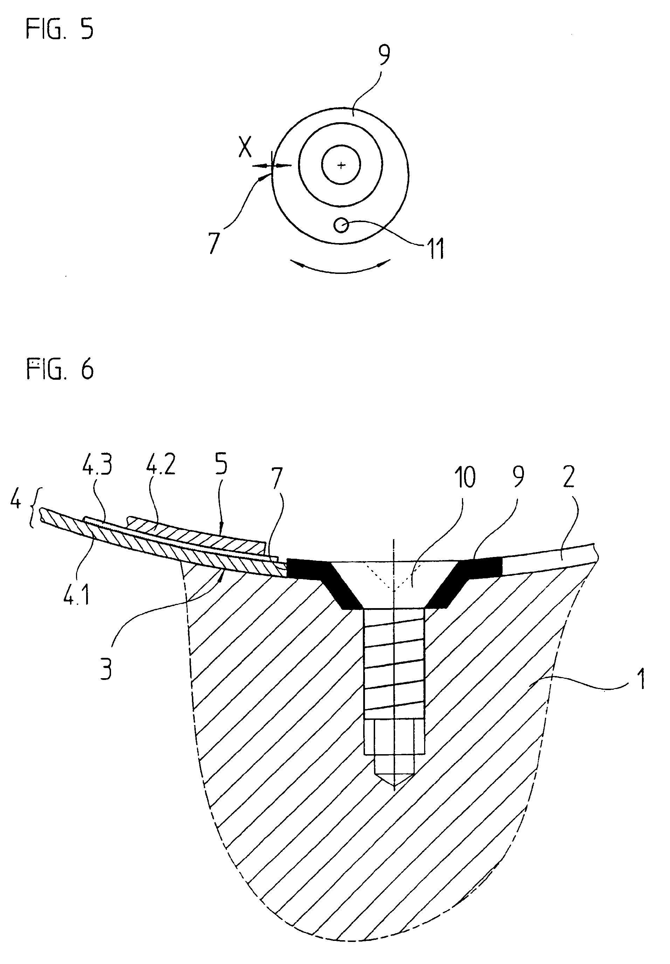

- Figur 5: einen Ausschnitt einer weiteren Winkelmesseinrichtung.

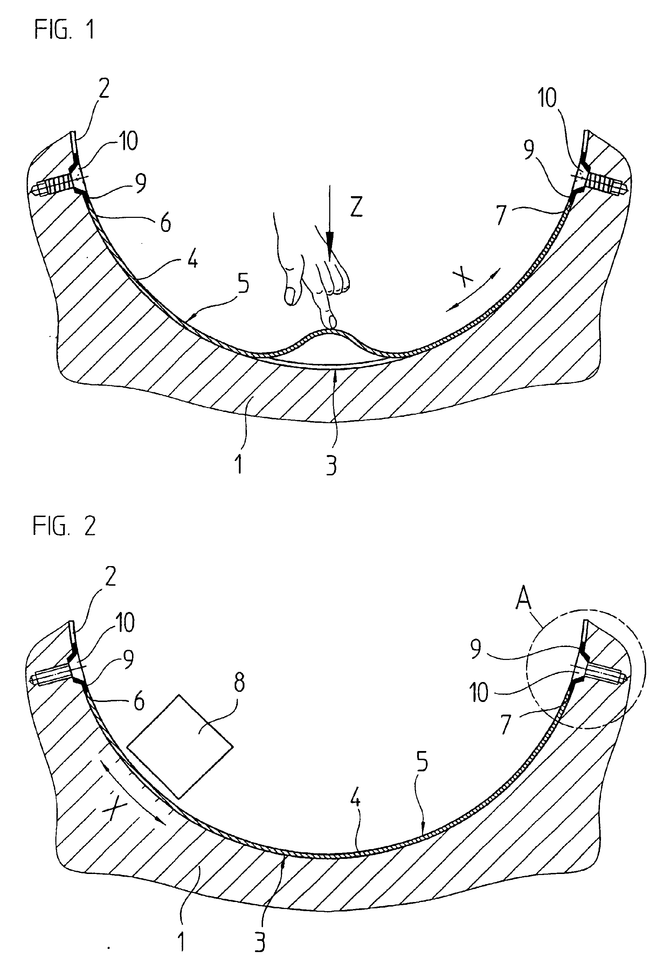

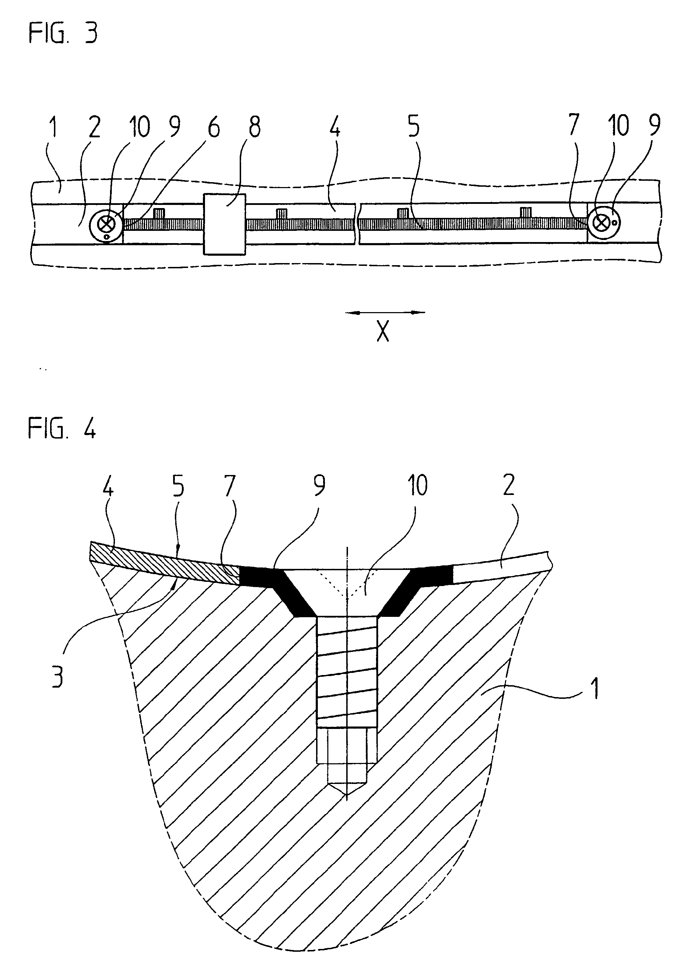

Eine in Figur 1 im Längsschnitt schematisch dargestellte Winkelmesseinrichtung weist einen in Messrichtung X auslenkbaren bzw. drehbaren Trägerkörper 1 auf. In der konkav gekrümmten Innenwand des Trägerkörpers 1 ist eine Nut 2 eingearbeitet. Der Boden der Nut 2 dient als Anlagefläche 3 eines in Richtung Z, also quer zur Messrichtung X federelastischen Maßbandes 4. Dieses Maßband 4 ist vorteilhafterweise ein Stahlband und weist eine Messteilung 5 auf (in Figur 3 dargestellt). Die Messteilung 5 ist eine lichtelektrisch abtastbare Inkrementalteilung, sie kann aber auch in codierter Form und/oder für andere physikalische Prinzipien abtastbar, z.B. magnetisch, kapazitiv oder induktiv ausgebildet sein.

Zur Montage des Maßbandes 4 am Trägerkörper 1 sind zwei Anschlagflächen 6 und 7 vorgesehen, deren Abstand in Messrichtung X etwa der Länge des Maßbandes 4 entspricht. Bei der Montage des Maßbandes 4 werden die Enden mit den Anschlagflächen 6, 7 in Kontakt gebracht und das Maßband 4 zwischen den Anschlagflächen 6, 7 eingeklemmt. Der Abstand der Anschlagflächen 6, 7 und damit der Umfang der Anlagefläche 3 ist an die Länge des Maßbandes 4 angepasst, so dass das Maßband 4 mit einer Art Knackfrosch-Effekt einschnappt und sich anschließend zwischen den Anschlagflächen 6, 7 frei entspannt.

In den Figuren 2 und 3 ist das montierte Maßband 4 dargestellt, das im Messbetrieb von einer Abtasteinrichtung 8 abgetastet wird, welche positionsabhängige Abtastsignale erzeugt.

Damit das Maßband 4 zwischen den Anschlagflächen 6, 7 fremdmittelfrei durch Eigenspannung spielfrei an der Anlagefläche 3 hält, ist der Abstand der Anschlagflächen 6,7 justierbar. Die Justierung erfolgt durch Verändern der Lage zumindest einer der Anschlagflächen 6, 7 in Messrichtung X. Hierzu ist ein Justierelement in Form einer exzentrisch gelagerten und drehbaren Scheibe 9 vorgesehen. Die Scheibe 9 ist in der Nut 2 um eine Schraube 10 drehbar, wodurch sich die für das Maßband 4 wirksame Anschlagfläche 6, 7 in Längsrichtung des Maßbandes 4, also in Messrichtung X verlagert, wie in Figur 5 am Beispiel der Anschlagfläche 7 vergrößert dargestellt ist. Die Anschlagfläche 7 wird dabei von der Umfangfläche der Scheibe 9 gebildet. Zum Verdrehen der Scheibe 9 weist diese eine Angriffsmöglichkeit, beispielsweise in Form einer seitlichen Bohrung 11 oder einer seitlichen Riffelung oder Erhöhung auf. In der Soll-Drehlage wird die Scheibe 9 durch Eindrehen der Schraube 10 undrehbar und unverschiebbar am Trägerkörper 1 fixiert.

Zur vereinfachten Lagerhaltung sind die beiden endseitigen Anschlagflächen 6, 7 des Maßbandes 4 gleichartig und somit justierbar ausgebildet.

Besonders vorteilhaft ist es, wenn die Tiefe der Nut 2 zumindest etwa der Dicke des Maßbandes 4 entspricht, und dass die Schraube 10 sowie die Scheibe 9 nicht über das Maßband 4 und somit über die Nut 2 ragen. Dadurch kann die Abtasteinrichtung 8 über diesen Bereich hinaus verschoben werden.

In Figur 6 ist ein Ausschnitt einer weiteren Winkelmesseinrichtung gemäß der Erfindung dargestellt. Das Maßband 4 ist ein Paket aus mehreren Streifen 4.1 und 4.2 gemäß der DE 196 11 983 C1, insbesondere bestehend aus zwei elastisch biegbaren, aneinander über einen viskosen Zwischenfilm 4.3 - z.B. Öl - haftenden Bändern 4.1 und 4.2, auf deren obersten die Messteilung 5 angebracht ist. Ein derartiges Maßband 4 besteht dann aus einem Grundband 4.1, das ein Stahlband sein kann und einem daran über die Ölschicht 4.3 haftenden, die Messteilung 5 tragenden weiteren Band 4.2. Bei diesem Aufbau ist es möglich, dass nur das Grundband 4.1 mit den Anschlagflächen 6, 7 in Kontakt steht und sich das die Messteilung 5 tragende Band 4.2 in Messrichtung X frei ausdehnen kann, aber durch die Haftung am Grundband 4.1 trotzdem gut dem Verlauf der Anlagefläche 3 folgt, da ja das Grundband 4.1 durch die Einspannung zwischen den beiden Anschlagflächen 6 und 7 spielfrei an der Anlagefläche 3 anliegt. Das die Messteilung 5 tragende Band 4.2 ist hierzu etwas kürzer gewählt als das Grundband 4.1. Zur Schaffung eines Fixpunktes kann das die Messteilung 5 tragende Band 4.2 an einer Position starr am Grundband 4.2 fixiert werden.

## Patentansprüche

1. Winkelmesseinrichtung mit einem Maßband (4), wobei das Maßband (4) an einer konkav gekrümmten Anlagefläche (3) eines Trägerkörpers (1) durch Klemmung befestigt ist, indem die Länge des Maßbandes (4) und der Umfang der Anlagefläche (3) so aufeinander abgestimmt sind, dass das Maßband (4) einschnappbar ist und dann spielfrei an der Anlagefläein che (3) anliegt, **dadurch gekennzeichnet, dass** die Winkelmesseinrichtung Justierelement (9) aufweist, dass der Umfang der Anlagefläche (3) durch Anschlagflächen (6, 7) vorgegeben ist, an denen jeweils ein Ende des Maßbandes (4) anliegt, und dass zumindest eine der Anschlagflächen (6, 7) mittels des Justierelementes (9) verstellbar ist, wodurch der Abstand der Anschlagflächen (6, 7) an die Länge des Maßbandes (4) anpassbar ist.

2. Winkelmesseinrichtung nach Anspruch 1, **dadurch gekennzeichnet, dass** die verstellbare Anschlagfläche (6, 7) die Umfangsfläche eines exzentrisch gelagerten und drehbaren Rotationskörpers (9) ist.

3. Winkelmesseinrichtung nach Anspruch 2, **dadurch gekennzeichnet, dass** der Rotationskörper eine drehbare Scheibe (9) ist, die durch eine Schraube (10) in ihrer Drehstellung fixierbar ist.

4. Winkelmesseinrichtung nach einem der vorhergehenden Ansprüche, **dadurch gekennzeichnet, dass** das Maßband (4) in einer Nut (2) des Trägerkörpers (1) angeordnet ist.

5. Winkelmesseinrichtung nach einem der vorhergehenden Ansprüche, **dadurch gekennzeichnet, dass** das Maßband (4) ein quer zur Längsrichtung federelastisch auslenkbares Stahlband ist.

6. Winkelmesseinrichtung nach einem der Ansprüche 1 bis 4, **dadurch gekennzeichnet, dass** das Maßband (4) aus einem elastisch biegbaren Grundband (4.1) und einem daran über einen viskosen Zwischenfilm (4.3) haftenden weiteren Band (4.2) besteht, auf dem die Messteilung (5) angebracht ist.

7. Winkelmesseinrichtung nach Anspruch 6, **dadurch gekennzeichnet, dass** ausschließlich das Grundband (4.1) an den Anschlagflächen (6, 7) anliegt.

## Claims

1. Angle measuring device having a measuring strip (4), the measuring strip (4) being mounted on a concavely curved support surface (3) of a carrier body (1) by clamping in that the length of the measuring strip (4) and the circumference of the contact surface (3) are coordinated to each other such that the measuring strip (4) can be snapped in and then abuts without clearance against the support surface (3), **characterised in that** the angle measuring device has an adjustment element (9), **in that** the circumference of the support surface (3) is prescribed by stop surfaces (6, 7) against which one end respectively of the measuring strip (4) abuts and **in that** at least one of the stop surfaces (6, 7) is adjustable by means of the adjustment element (9), as a result of which the spacing of the stop surfaces (6, 7) is adaptable to the length of the measuring strip (4).

2. Angle measuring device according to claim 1, **characterised in that** the adjustable stop surface (6, 7) is the circumferential surface of an eccentrically mounted and rotatable rotational body (9).

3. Angle measuring device according to claim 2, **characterised in that** the rotational body is a rotatable disc (9) which can be fixed in its rotational position by a screw (10).

4. Angle measuring device according to one of the preceding claims, **characterised in that** the measuring strip (4) is disposed in a groove (2) of the carrier body (1).

5. Angle measuring device according to one of the preceding claims, **characterised in that** the measuring strip (4) is a steel strip which can be deflected elastically transversely relative to the longitudinal direction.

6. Angle measuring device according to one of the claims 1 to 4, **characterised in that** the measuring strip (4) comprises an elastically flexible basic strip (4.1) and a further strip (4.2) which adheres thereon via a viscous intermediate film (4.3) and on which the measuring division (5) is fitted.

7. Angle measuring device according to claim 6, **characterised in that** exclusively the basic strip (4.1) abuts against the stop surfaces (6, 7).

## Revendications

1. Dispositif de mesure d'angle qui comprend un ruban de mesure (4) fixé par collage sur une surface d'appui (3) concave d'un corps porteur (1), la longueur du ruban de mesure (4) et l'étendue de la surface d'appui (3) étant accordées l'une à l'autre de manière que le ruban de mesure (4) peut être encliqueté et ainsi appliqué sans jeu sur cette surface d'appui (3), **caractérisé en ce que** le dispositif de mesure d'angle présente un élément d'ajustage (9), que l'étendue de la surface d'appui (3) est prédéfinie par des portées de butée (6, 7) qui sont en contact avec les extrémités du ruban de mesure (4) et dont une au moins peut être déplacée par l'élément d'ajustage (9) de sorte que la distance des portées de butée (6, 7) peut être adaptée à la longueur du ruban de mesure (4).

2. Dispositif de mesure selon la revendication 1, **caractérisé en ce que** la portée de mesure (6, 7) mobile est la surface périphérique d'un corps rotatif (9) monté excentré.

3. Dispositif de mesure selon la revendication 2, **caractérisé en ce que** le corps rotatif (9) est un disque tournant (9) dont la position de rotation peut être fixée par une vis (10).

4. Dispositif de mesure selon une des revendications précédentes, **caractérisé en ce que** le ruban de mesure (4) est disposé dans une rainure (2) du corps porteur (1).

5. Dispositif de mesure selon une des revendications précédentes, **caractérisé en ce que** le ruban de mesure (4) est un ruban en acier qui peut être dévié élastiquement, perpendiculairement à sa direction longitudinale.

6. Dispositif de mesure selon une des revendications précédentes, **caractérisé en ce que** le ruban de mesure (4) est constitué par un ruban de base (4.1) flexible élastiquement et par un second ruban (4.2) qui est fixé sur lui par un film intermédiaire adhésif et qui porte la division de mesure (5).

7. Dispositif de mesure selon la revendication 6, **caractérisé en ce que** seul le ruban de base (4.1) est appliqué sur les portées de butée (6, 7).
